# EUROPÄISCHE PATENTSCHRIFT

(11) **EP 0 474 004 B1**
(45) Veröffentlichungstag und Bekanntmachung des Hinweises auf die Patenterteilung: **15.03.1995**
(21) Anmeldenummer: 91113831.1
(22) Anmeldetag: 19.08.1991
(51) Int. Cl.: H02K 7/118

(54) **Eine Anlaufhilfe aufweisender Synchronmotor**
Synchronous motor having a starting device
Moteur synchrone comportant un dispositif de démarrage

(30) Priorität: 07.09.1990 DE 4028416
(43) Veröffentlichungstag der Anmeldung: 11.03.1992
(73) Patentinhaber: Hanning Elektro-Werke GmbH & Co., D-33806 Oerlinghausen (DE)
(72) Erfinder: Krogmeier, Norbert Dipl.Ing., D-4800 Bielefeld 12 (DE)
(74) Vertreter: Hentzschel, Hans-Jürgen, Dipl.-Ing.

(56) Entgegenhaltungen:
- EP-A- 0 320 060
- DE-B- 2 534 135
- DE-C- 492 985

## Beschreibung

Die Erfindung bezieht sich auf einen eine Anlaufhilfe aufweisenden Synchronmotor, dessen permanentmagnetisch erregter Rotor mit einer Last, beispielsweise dem Laufrad einer Förderpumpe, nach dem Zurücklegen eines Verdrehspiels kuppelbar ist, wobei das eine Kupplungsteil aus einem mit in beiden Motordrehrichtungen wirksamen Anschlägen versehenen, axial zur Rotorwelle angeordneten zylindrischen Ring und das zweite Kupplungsteil aus einem innerhalb dieses Ringes der Rotorwelle aufgesetzten Mitnehmer besteht.

Aus der DE 34 20 371 A1 sowie der DE 36 08 566 A1 sind Anordnungen zum Starten eines Synchronmotors bekannt, bei denen wie im Falle der vorgenannten Anlaufhilfe jeweils an einem Kupplungsteil angeordnete Anschläge und Mitnehmer zum Übertragen der Antriebskraft nach dem Zurücklegen eines Verdrehspiels dienen. Diese Anschläge und Mitnehmer sind jedoch sehr großen Belastungen ausgesetzt, die somit in der Praxis zu deren starker Abnutzung oder sogar zu ihrer baldigen Zerstörung führen müssen. Selbst entsprechend der DE 37 41 977 A1 an den festen Begrenzungsanschlägen angeordnete nachgiebige Zwischenglieder vermögen wegen der auftretenden Druckbelastung nicht für Abhilfe zu sorgen, insofern es sich um Motoren größerer Leistung handelt, wie dahingehende Versuche gezeigt haben.

Aufgabe der Erfindung ist es, einen mit Verdrehspiel des Rotors arbeitenden Synchronmotor zu schaffen, der über eine auch für größere Motorleistungen geeignete Anlaufhilfe verfügt.

Zur Lösung der gestellten Aufgabe schlägt die Erfindung in der Hauptsache vor, daß der mit Anschlägen für den Mitnehmer versehene zylindrische Ring aus einem gummielastischen Werkstoff gefertigt ist. Aufgrund dieses Merkmals wird statt der absoluten Druckbelastung bisheriger, an den festen Begrenzungsanschlägen vorgesehener nachgiebiger Zwischenglieder eine Biegebeanspruchung des ringförmigen Kupplungsteiles erreicht, das infolgedessen eine größere Widerstandsfähigkeit als pufferartige Zwischenglieder besitzt. Dadurch treten nun die bei druckbelasteten Gummipuffern festgestellten Zerstörungserscheinungen überraschenderweise nicht mehr auf.

In Weiterbildung der Erfindung hat es sich als besonders vorteilhaft herausgestellt, wenn der aus gummielastischem Werkstoff gefertigte zylindrische Ring in ein ihn hülsenförmig umschließendes, die Kraftübertragung gegenüber seiner Umfangsfläche bewirkendes Bauelement eingesetzt ist, wobei das den aus gummielastischem Werkstoff gefertigten zylindrischen Ring aufnehmende Bauelement zwecks konstruktiver Vereinfachung des Motoraufbaus der Rotor sein kann. Durch diese Maßnahme wird dem als gummielastischer Ring gestalteten Kupplungsteil die Möglichkeit gegeben, in dem es ihn umschließenden Bauelement kurzzeitig durchzurutschen, solange nämlich, bis es sich infolge seiner vom Mitnehmer verursachten Verformung mit seiner Umfangsfläche fest anlegt und erst daraufhin eine endgültige einwandfreie Kraftübertragung vermittelt. Hiermit wird also eine das Anlaufverhalten des Motors noch zusätzlich verbessernde Wirkung erreicht.

Ein Ausführungsbeispiel des Erfindungsgegenstandes kommt nachfolgend anhand der Zeichnung zur Beschreibung. Darin zeigen im einzelnen:
- Fig. 1: den Längsschnitt eines mit der erfindungsgemäßen Anlaufhilfe ausgerüsteten, eine Förderpumpe antreibenden Synchronmotors, und
- Fig. 2: den in Fig. 1 angegebenen Querschnitt A-B im Bereich der Anlaufhilfe dieses Motors.

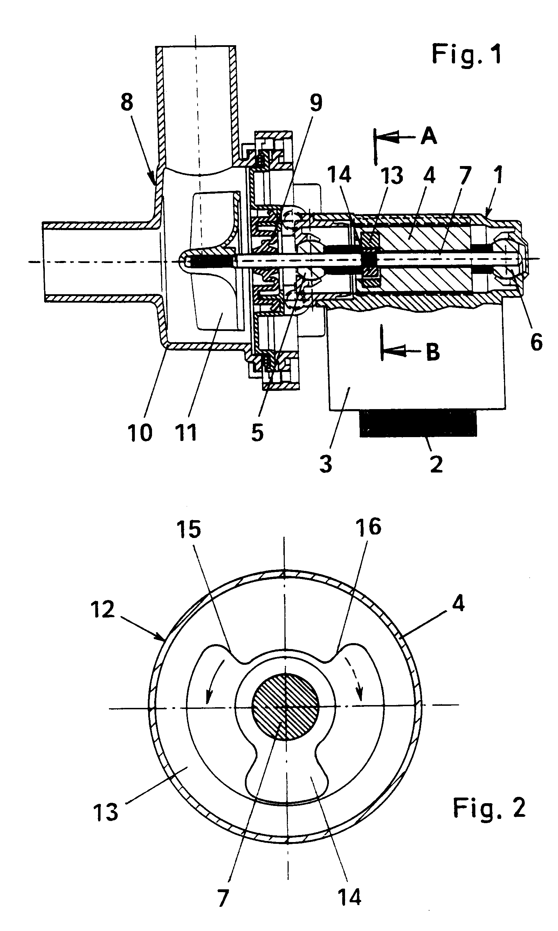

Der aus Fig. 1 hervorgehende Synchronmotor 1 setzt sich aus einem die Wicklung 2 aufnehmenden Stator 3 und dem darin umlaufenden Rotor 4 zusammen. Dieser Rotor 4 treibt über die in Kalottenlagern 5 und 6 gehaltene Rotorwelle 7 eine Förderpumpe 8 an, bei der es sich z.B. um die Laugenpumpe einer Waschmaschine handeln kann, deren durch einen Dichtungsbereich 9 vom Synchronmotor 1 getrenntes Pumpengehäuse 10 das unmittelbar auf der Rotorwelle 7 befestigte Pumpenlaufrad 11 aufnimmt.

Da beim Anlaufen des Rotors 4 dessen Antriebskraft erst nach dem Zurücklegen eines Verdrehspiels auf das Pumpenlaufrad 11 übertragen werden soll, ist der Rotor 4 der Rotorwelle 7 drehbar aufgesetzt sowie über eine Kupplungsanordnung 12 damit verbindbar. Diese Kupplungsanordnung 12 setzt sich gemäß der Schnittdarstellung in Fig. 2 aus einem stirnseitig in den Rotor 4 eingesetzten, aus gummielastischem Werkstoff gefertigten zylindrischen Ring 13 und einem innerhalb dessen auf der Rotorwelle 7 festgelegten Mitnehmer 14 zusammen, der je nach Drehrichtung des Rotors 4 mit dem Anschlag 15 oder 16 des Ringes 13 in Berührung kommt.

Die Wirkungsweise der zwischen dem Rotor 4 und der Rotorwelle 7 vorgesehenen Kupplungsanordnung 12 besteht darin, daß beim Anlaufen des Motors 1 der Rotor 4 und mit ihm also der Ring 13 erst eine Teilumdrehung zurücklegen müssen, bis einer der Anschläge 15 oder 16 mit dem Mitnehmer 14 in Eingriff gelangt. Hat der zylindrische Ring 13 eine solche Stellung eingenommen, wird er zunächst in dem ihn hülsenförmig umschließenden Rotor 4 um einen bestimmten Winkelbetrag durchrutschen, bis er sich infolge seiner an der Druckstelle des Mitnehmers 14 auftretenden Verformung mit der Umfangsfläche endgültig fest an die Gegenfläche des Rotors 4 anlegt. Nach dem Erreichen dieses Zustandes ist es schließlich so weit, daß die Rotorwelle 7 vom Rotor 4 mitgenommen und damit die inzwischen erreichte volle Leistung des Synchronmotors 1 auf die Förderpumpe 8 übertragen wird.

Durch den zuvor erläuterten Startvorgang des erfindungsgemäßen Synchronmotors 1 ergibt sich ein völlig lastfreies Anlaufen des Rotors 4, da er in der ersten Bewegungsphase nur geringe Reibungswiderstände zu überwinden und seine Eigenmasse zu beschleunigen hat. Erst im Anschluß daran müssen hohe Reibungsverluste aufweisende Teile aus ihrer Ruhelage herausgeführt werden, wozu dann aber bereits das volle Motordrehmoment zur Verfügung steht. Die dabei auftretenden großen Anfangskräfte werden aufgrund der Eigenschaften des zwischengeschalteten gummielastischen Ringes 13 äußerst gedämpft übertragen, weshalb es weder zu Materialschäden noch zu Geräuschbelästigungen kommen kann.

In Abwandlung des zur Beschreibung gelangten Synchronmotors 1 wäre es beispielsweise möglich, den Kraftfluß vom Rotor 4 über den zylindrischen Ring 13, den Mitnehmer 14 und die Rotorwelle 7 zum Pumpenlaufrad 11 dadurch umzukehren, daß man den Mitnehmer 14 dem Rotor 4 zuordnen und den Ring 13 in einem auf der Rotorwelle 7 befestigten separaten hülsenförmigen Bauelement unterbringen würde. Ebenso ließe sich auch von der hierzu fest mit dem Rotor 4 zu verbindenden Rotorwelle 7 eine gesonderte Antriebswelle abtrennen und als Folge davon die Kupplungsanordnung 12 zwischen den so entstehenden beiden Wellenteilen vorsehen. Eine solche Lösung käme allerdings wegen des erhöhten Aufwandes an Lagerungen voraussichtlich nur in Frage, wenn es sich in bestimmten Fällen funktionstechnisch als notwendig herausstellen sollte, daß der Durchmesser des gummielastischen Ringes 13 größer als der Durchmesser des Rotors 4 sein müßte.

## Patentansprüche

1. Eine Anlaufhilfe aufweisender Synchronmotor (1), dessen permanentmagnetisch erregter Rotor (4) mit einer Last, beispielsweise dem Laufrad (11) einer Förderpumpe (8), nach dem Zurücklegen eines Verdrehspiels kuppelbar ist, wobei das eine Kupplungsteil aus einem mit in beiden Motordrehrichtungen wirksamen Anschlägen (15, 16) versehenen, axial zur Rotorwelle (7) angeordneten zylindrischen Ring (13) und das zweite Kupplungsteil aus einem innerhalb dieses Ringes (13) der Rotorwelle (7) aufgesetzten Mitnehmer (14) besteht,
dadurch gekennzeichnet, daß der mit Anschlägen (15, 16) für den Mitnehmer (14) versehene zylindrische Ring (13) aus einem gummielastischen Werkstoff gefertigt ist.

2. Anlaufhilfe für einen Synchronmotor nach Anspruch 1, dadurch gekennzeichnet, daß der aus gummielastischem Werkstoff gefertigte zylindrische Ring (13) in ein ihn hülsenförmig umschließendes, die Kraftübertragung gegenüber seiner Umfangsfläche bewirkendes Bauelement eingesetzt ist.

3. Anlaufhilfe für einen Synchronmotor nach Anspruch 2, dadurch gekennzeichnet, daß das den aus gummielastischem Werkstoff gefertigten zylindrischen Ring (13) aufnehmende Bauelement der Rotor (4) ist.

## Claims

1. Synchronous motor (1) having a starting device of which the permanent magnetic rotor (4) with a load, for instance with the impeller (11) of a feed pump (2), is suitable for coupling after a circumferential backlash, in which case one of the coupling pieces provided with stoppers (15, 16) in both directions of rotation of the motor consists of a cylindrical ring (13) arranged in axial position to the rotor shaft (7), and the second coupling piece provides a catch (14) placed on the rotor shaft (7) within the ring (13) characterized in that the cylindrical ring (13) provided with stoppers (15, 16) for the catch (14) is manufactured of a gum-elastic material.

2. Starting device of a synchronous motor according to claim 1, characterized in that the cylindrical ring (13) of a gum-elastic material is enclosed in a bushing type element that effects power transmission to its peripheral surface.

3. Starting device of a synchronous motor according to claim 2, characterized in that the rotor (4) is the element that takes up the cylindrical ring (13) of a gum-elastic material.

## Revendications

1. Moteur synchrone (1) comportant un dispositif de démarrage, dont le rotor (4), excité par aimant permanent, peut être accouplé à une charge, par exemple la roue (11) d'une pompe de refoulement (8), après rattrapage d'un jeu de rotation, étant entendu que l'une des parties de l'accouplement est équipée d'une bague cylindrique (13), présentant le même axe que l'arbre (7) du rotor, et équipée de butées (15, 16) agissant dans les deux sens de rotation du moteur, et étant entendu que la deuxième partie de l'accouplement est constituée par un entraîneur (14) installé à l'intérieur de cette bague (13) de l'arbre (7) du rotor, caractérisé en ce que la bague cylindrique (13), équipée de butées (15, 16) pour l'entraîneur (14), est réalisée dans un matériau en caoutchouc élastique.

2. Dispositif de démarrage pour moteur synchrone, suivant la revendication 1, caractérisé en ce que la bague cylindrique (13), réalisée dans un matériau en caoutchouc élastique, est installée dans une pièce de construction qui l'entoure en ayant la forme d'une douille, et effectuant la transmission d'effort par sa surface périphérique.

3. Dispositif de démarrage pour moteur synchrone, suivant la revendication 2, caractérisé en ce que la pièce de construction recevant la bague cylindrique (13), réalisée dans un matériau en caoutchouc élastique, est le rotor (4).
